# EUROPEAN PATENT APPLICATION

(11) **EP 4 280 097 A1**
(43) Date of publication of application: **22.11.2023**
(21) Application number: 22845056.5
(22) Date of filing: 20.06.2022
(51) Int. Cl.: G06F 40/279

(54) **DATA PROCESSING METHOD AND APPARATUS, AND COMPUTER DEVICE AND STORAGE MEDIUM**

(30) Priority: 20.07.2021 CN 202110821632
(71) Applicant: Beijing Sogou Technology Development Co., Ltd., Beijing 100084 (CN)
(72) Inventor: DUAN, Wenjun, Beijing 100084 (CN); BI, Jingrong, Beijing 100084 (CN); LI, Mei, Beijing 100084 (CN); MENG, Fanbo, Beijing 100084 (CN); PENG, Yun, Beijing 100084 (CN); LIU, Kai, Beijing 100084 (CN)
(74) Representative: EP&C
(86) International application number: PCT/CN2022/099810
(87) International publication number: WO 2023/000891

(57) **Abstract**

A data processing method and apparatus, and a computer device and a storage medium. The method comprises: acquiring sign language action data to be processed (101); on the basis of a preconstructed sign language annotation system, performing element analysis on the sign language action data, so as to determine a sign language annotation sequence, which corresponds to the sign language action data, wherein the sign language annotation sequence contains annotation information of each basic sign language element, which corresponds to the sign language action data (102); and according to the sign language annotation sequence, performing operation processing on the sign language action data (103).

## Description

This application claims priority to Chinese Patent Application No. 202110821632.4, filed with the China National Intellectual Property Administration on July 20, 2021, and entitled "DATA PROCESSING METHOD AND APPARATUS, AND DEVICE FOR DATA PROCESSING", which is incorporated herein by reference in its entirety.

### FIELD OF THE TECHNOLOGY

The present disclosure relates to the field of computer technologies, and in particular, to a data processing method and apparatus, a computer device, and a storage medium.

### BACKGROUND OF THE DISCLOSURE

Sign language is a communication way for special users who are hearing impaired or unable to speak. Usually, normal users do not understand the sign language, resulting in difficulties in communication between the special users and normal users.

In a conventional method, the normal users and the special users may communicate with each other with the assistance of a sign language translation tool or a sign language synthesis tool. However, in practices, the sign language is used as a visual language, so that for the same sign language word, different user may present different sign language actions. Furthermore, because the general sign language is only popularized lately, the sign languages used in the north and the south are different. As a result, the processing of the traditional sign language translation tool or sign language synthesis tool may not accurate.

### SUMMARY

According to embodiments of the present disclosure, a data processing method, a data processing apparatus, a computer device, and a storage medium are provided.

According to one aspect, the present disclosure provides a data processing method, performed by a computer device and including:
obtaining to-be-processed sign language action data;
performing element analysis on the sign language action data based on a pre-established sign language tagging system, to determine a sign language tag sequence corresponding to the sign language action data, the sign language tag sequence comprising tagging information of basic sign language elements corresponding to the sign language action data; and
performing operation processing on the sign language action data based on the sign language tag sequence.

According to another aspect, the present disclosure further provides a data processing apparatus, including:
a sign language action data obtaining module, configured to obtain to-be-processed sign language action data;
a sign language tag sequence determining module, configured to perform element analysis on the sign language action data based on a pre-established sign language tagging system, to determine a sign language tag sequence corresponding to the sign language action data, the sign language tag sequence comprising tagging information of basic sign language elements corresponding to the sign language action data; and
an operation processing execution module, configured to perform operation processing on the sign language action data based on the sign language tag sequence.

According to another aspect, the present disclosure provides a data processing method, performed by a computer device and including:
performing word segmentation processing on a to-be-translated text sequence, to obtain a natural word sequence corresponding to the text sequence;
determining second basic sign language elements respectively corresponding to natural words in the natural word sequence and second element items respectively corresponding to the second basic sign language elements;
sorting the second basic sign language elements and the second element items, to generate a sign language element sequence conforming to a sign language grammar rule;
determining a sign language tag sequence corresponding to the sign language element sequence based on a sign language tagging system; and
performing sign language translation processing on the text sequence based on the sign language tag sequence, to obtain a sign language action corresponding to the text sequence.

According to another aspect, the present disclosure further provides a data processing apparatus, including:
a word segmentation processing module, configured to perform word segmentation processing on a to-be-translated text sequence, to obtain a natural word sequence corresponding to the text sequence;
a second element determining module, configured to determine second basic sign language elements respectively corresponding to natural words in the natural word sequence and second element items respectively corresponding to the second basic sign language elements;
an element sequence generation module, configured to sort the second basic sign language elements and the second element items, to generate a sign language element sequence conforming to a sign language grammar rule;
a sign language tag sequence obtaining module, configured to determine a sign language tag sequence corresponding to the sign language element sequence based on a sign language tagging system; and
a translation processing module, configured to perform sign language translation processing on the text sequence based on the sign language tag sequence, to obtain a sign language action corresponding to the text sequence.

According to another aspect, the present disclosure further provides a computer device, including a memory and one or more processor, the memory storing computer-readable instructions, and the computer-readable instructions, when executed by the processor, causing the one or more processors to perform steps of the foregoing data processing method.

According to another aspect, the present disclosure further provides one or more non-volatile readable storage medium, storing computer-readable instructions, the computer-readable instructions, when executed by one or more processors, causing the one or more processors to perform steps of the foregoing data processing method.

According to another aspect, the present disclosure further provides a computer program product, including computer-readable instructions, the computer-readable instructions, when being executed by a processor, implementing steps of the foregoing data processing method.

Details of one or more embodiments of the present disclosure are provided in the accompanying drawings and descriptions below. Other features, objectives, and advantages of the present disclosure will become apparent from the specification, the accompanying drawings, and the claims.

### BRIEF DESCRIPTION OF THE DRAWINGS

To describe the technical solutions in the embodiments of the present disclosure more clearly, the following briefly describes the accompanying drawings required for describing the embodiments of the present disclosure. Apparently, the accompanying drawings in the following description show merely some embodiments of the present disclosure, and persons of ordinary skill in the art may still derive other drawings from these accompanying drawings without creative efforts.
FIG. 1A is a diagram of an application environment of a data processing method according to an embodiment of the present disclosure.
FIG. 1B is a flowchart of a data processing method according to an embodiment of the present disclosure.
FIG. 1C is a flowchart of a data processing method according to an embodiment of the present disclosure.
FIG. 2A is a structural block diagram of a data processing apparatus according to an embodiment of the present disclosure.
FIG. 2B is a structural block diagram of a data processing apparatus according to an embodiment of the present disclosure.
FIG. 3 is a schematic structural diagram of a computer device according to an embodiment of the present disclosure.
FIG. 4 is a schematic structural diagram of a computer device according to an embodiment of the present disclosure.

### DESCRIPTION OF EMBODIMENTS

The following clearly and completely describes the technical solutions in embodiments of the present disclosure with reference to the accompanying drawings in the embodiments of the present disclosure. Apparently, the described embodiments are some but not all of the embodiments of the present disclosure. All other embodiments obtained by persons of ordinary skill in the art based on the embodiments of the present disclosure without creative efforts shall fall within the protection scope of the present disclosure.

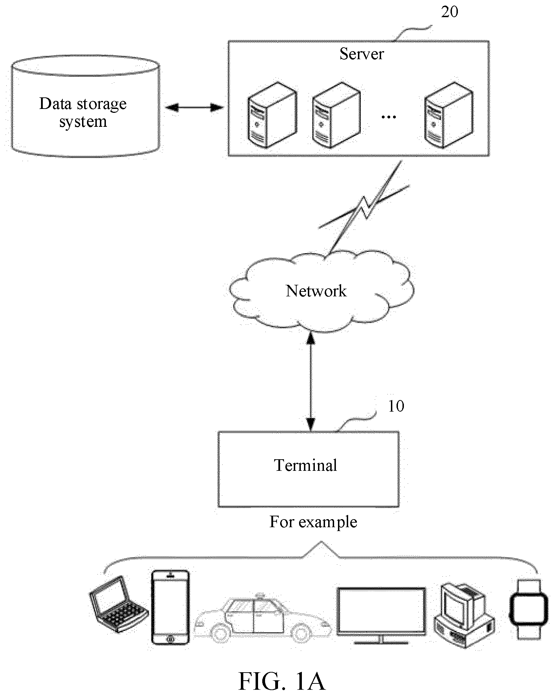

A data processing method provided in the embodiments of the present disclosure may be applied to an application environment shown in FIG. 1A. A terminal 10 communicates with a server 20 through a network. A data storage system may store data to be processed by the server 20. The data storage system may be integrated on the server 20, or may be placed on a cloud or another server.

Specifically, the terminal 10 obtains to-be-processed sign language action data, performs element analysis on the sign language action data based on a pre-established sign language tagging system, to determine a sign language tag sequence corresponding to the sign language action data, the sign language tag sequence including tagging information of basic sign language elements corresponding to the sign language action data, and performs operation processing on the sign language action data based on the sign language tag sequence. The terminal 10 may obtain the pre-established sign language tagging system from the server 20, and may send the sign language tag sequence to the server 20, and the server 20 may store the sign language tag sequence.

In some embodiments, the terminal 10 may send a sign language action data processing request to the server 20, the sign language action data processing request carries the to-be-processed sign language action data, and the server 20 may obtain the to-be-processed sign language action data from the sign language action data processing request, perform element analysis on the sign language action data based on the pre-established sign language tagging system, determine the sign language tag sequence corresponding to the sign language action data, the sign language tag sequence including tagging information of the basic sign language elements corresponding to the sign language action data, and perform operation processing on the sign language action data based on the sign language tag sequence. The server 20 may send the sign language tag sequence to the terminal 10, and may further store the sign language tag sequence.

The terminal 10 may be, but not limited to, a desktop computer, a notebook computer, a smartphone, a tablet computer, an Internet of Things device, or a portable wearable device. The Internet of Things device may be a smart speaker, a smart television, a smart air conditioner, a smart vehicle-mounted device, or the like. The portable wearable device may be a smart watch, a smart bracelet, a head-mounted device, or the like. The server 20 may be implemented by using an independent server or a server cluster that comprises a plurality of servers.

The data processing method provided in this embodiment of the present disclosure may be applied to a terminal device, or may be applied to a server. The terminal may include, but is not limited to: a dedicated sign language translation device, a sign language action synthesis device, a smart terminal, a computer, a personal digital assistant (PDA), a tablet computer, an e-book reader, a Moving Picture Experts Group Audio Layer III (MP3) player, a Moving Picture Experts Group Audio Layer IV (MP4) player, a laptop portable computer, a vehicle-mounted device, a smart television, a wearable device, and the like.

The server may be an independent physical server, or may be a server cluster or a distributed system formed by a plurality of physical servers, or may be a cloud server that provides basic cloud computing services such as a cloud service, a cloud database, cloud computing, a cloud function, cloud storage, cloud communication, a network service, a middleware service, a content delivery network (CDN), big data, and an AI platform.

### Method embodiments

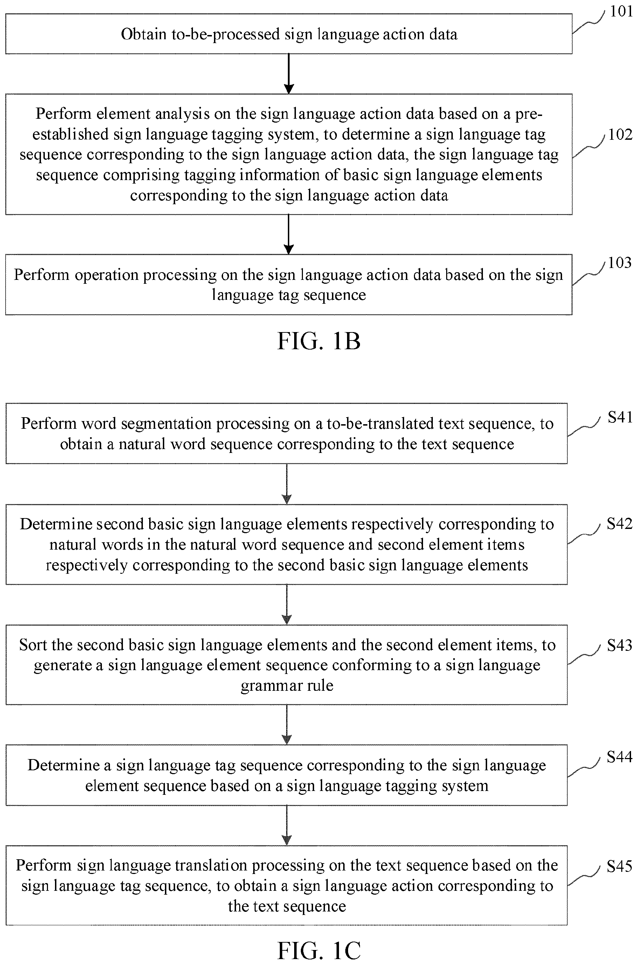

FIG. 1B is a flowchart of a data processing method of the present disclosure. The method may be performed by a terminal or a server, or may be performed by the terminal and the server jointly. Descriptions are made by using an example in which the method is applied to a terminal 10 in FIG. 1A, and the data processing method may specifically include the following steps:
Step 101: Obtain to-be-processed sign language action data.

The sign language action data is data related to a sign language action, and includes, but is not limited to, at least one of a descriptive text, picture, video and animation of a sign language action. The sign language action data obtained in this embodiment of the present disclosure may be at least one of a sign language video and a sign language picture that include a sign language action. The sign language video or the sign language picture may be a video or a picture photographed by a terminal device through a photographing device when a target object communicates with a person or machine by sign language, or may be a sign language video or a sign language picture stored in the terminal device and/or server, or may be a sign language video or a sign language picture downloaded from a network side. The target object includes, but is not limited to, people with hearing impairment, deaf people, and hearing people.

Step 102: Perform element analysis on the sign language action data based on a pre-established sign language tagging system, to determine a sign language tag sequence corresponding to the sign language action data, the sign language tag sequence including tagging information of basic sign language elements corresponding to the sign language action data.

The sign language tagging system established in this embodiment of the present disclosure includes basic sign language elements corresponding to various sign language actions, and the basic sign language elements include at least one of: a left or right arm feature, a single or both hands shape feature, an orientation or motion feature, a knuckle bending angle, a facial expression feature, and constraint information. Different basic sign language elements represent sign language action features of different dimensions. The basic sign language element may be understood as a minimum feature unit of a sign language action, and any sign language action may include one or more basic sign language elements. Each basic sign language element includes at least one element item. For example, in an exemplary sign language tagging system of the present disclosure, the one or both hand shape feature is corresponding to 67 different element items, the orientation or motion feature is corresponding to 66 different element items, the constraint information is corresponding to 57 different element items, and the facial expression feature is corresponding to 8 different element items. The terminal may combine different types of basic sign language elements, to obtain different sign language actions.

The sign language tagging system includes the basic sign language elements and tagging information corresponding to each of the element items of the basic sign language elements. The tagging information of the basic sign language elements corresponding to the to-be-processed sign language action data, that is, the sign language tag sequence corresponding to the sign language action data, can be determined based on the sign language tagging system. The sign language tag sequence includes the tagging information of the basic sign language elements corresponding to the sign language action data.

The tagging information is used for uniquely identifying each of the element items. The tagging information can be recognized by a machine, having wide representativeness and universality, and being applicable to most sign language application scenarios.

In some embodiments, the sign language tag sequence may further include timestamps corresponding to the basic sign language elements of the sign language action data, so that a processing sequence of the basic sign language elements can be determined based on the timestamps corresponding to the basic sign language elements when performing operation processing on the sign language action data. For example, a digital character is driven, based on the tagging information and the timestamps of the basic sign language elements in the sign language tag sequence, to perform a sign language action corresponding to the sign language action data. The digital character refers to a three-dimensional character model constructed by using 3D technologies.

Step 103: Perform operation processing on the sign language action data based on the sign language tag sequence.

The operation processing includes, but is not limited to, at least one of translating the sign language action data or performing the sign language action corresponding to the sign language action data.

Specifically, the terminal may drive, based on the sign language tag sequence, the pre-constructed three-dimensional character model to perform the sign language action corresponding to the sign language action data, or the terminal may translate the sign language action data based on the sign language tag sequence, to obtain a text corresponding to the sign language action data.

In the foregoing data processing method, after the to-be-processed sign language action data is obtained, element analysis on the sign language action data is performed based on the pre-established sign language tagging system, to determine a sign language tag sequence corresponding to the sign language action data, the sign language tag sequence including the tagging information of the basic sign language elements corresponding to the sign language action data, and then operation processing on the sign language action data is performed based on the sign language tag sequence. In this way, element analysis on the sign language action data is performed based on the pre-established sign language tagging system, to determine the basic sign language elements included in the sign language action data, that is, the to-be-processed sign language action data is disassembled into minimum feature units, which are applicable to analysis processing of various sign language action data and conducive to increasing accuracy of analyzing the sign language action data. In addition, in this embodiment of the present disclosure, by determining the tagging information of the basic sign language elements of the sign language action data, the sign language action data is converted into the sign language tag sequence that can be automatically identified by the machine, and then operation processing on the sign language action data is performed based on the sign language tag sequence, thereby improving efficiency and accuracy of processing the sign language action data.

In an optional embodiment of the present disclosure, before step 102 of performing element analysis on the sign language action data based on a pre-established sign language tagging system, the data processing method further includes:
Step S11: Perform disassembly and classification on sign language action data in a database, to obtain basic sign language elements and obtain element items for each of the basic sign language elements.

Step S12: Establish a sign language tagging system based on the basic sign language elements and the element items of each of the basic sign language elements, the sign language tagging system including tagging information corresponding to each of the element items of each of the basic sign language elements.

The sign language action data in the database includes data of various sign language actions used for interaction in daily lives and data of various sign language actions dedicated in professional fields. The sign language action data may be at least one of a descriptive text, picture, video and animation of a sign language action. The sign language action database may be established by widely searching for various sign language action materials, such as sign language teaching videos, Internet sign language materials, sign language dictionaries, and the like.

Specifically, the terminal may perform disassembly and classification on all sign language action data in the database, determine all basic sign language elements involved in the database and the element items of each basic sign language element, and determine the tagging information corresponding to each of the element items of each basic sign language element, to establish the sign language tagging system. The tagging information is used for uniquely identifying each of the element items of each basic sign language element. The tagging information can be recognized by the machine, has wide representativeness and universality, and is applicable to most sign language application scenarios. For example, the terminal may perform the disassembly and classification on all sign language action data in the database based on a linguistics framework.

In this embodiment, the sign language action data in the database is disassembled and classified to obtain the basic sign language elements and the element items corresponding to each basic sign language element, and the sign language tagging system is established based on the basic sign language elements and the element items corresponding to each basic sign language element, thereby increasing accuracy of the established sign language tagging system.

In some embodiments, the basic sign language elements include at least one of a left or right arm feature, a single or both hands shape feature, an orientation or motion feature, a knuckle bending angle, a facial expression feature, and constraint information.

The left or right arm feature may include a bending degree of the arm, a state of rising or droop, and other arm features in the sign language action. The single or both hands shape feature may include shapes and gestures of fingers. The orientation or motion feature may include a palm orientation, a motion state of an arm or palm, and other features. The knuckle bending angle is used for indicating bending degrees of knuckles of the fingers, for example, the third knuckle of the left index finger bends at 45°. The facial expression feature refers to a facial expression in sign language action, such as a smile, upset, or surprise expression. The constraint information may include a contact state of a key part and a time limitation in the sign language action, or other information. For example, in the sign language action of the sign language word "love", the constraint information is "the right palm is in contact with the top knuckle of the left thumb", and in the sign language action of the sign language word "red", the constraint information is "the right index finger and the middle finger touch the lip".

Different basic sign language elements represent sign language action features of different dimensions, and each basic sign language element is corresponding to a plurality of element items. For example, in an exemplary sign language tagging system of the present disclosure, the one or both hand shape feature is corresponding to 67 different element items, the orientation or motion feature is corresponding to 66 different element items, the constraint information is corresponding to 57 different element items, and the facial expression feature is corresponding to 8 different element items. The terminal may combine different types of basic sign language elements, to obtain different sign language actions.

The sign language tagging system in this embodiment of the present disclosure may be continually extended and improved. The more detailed the sign language tagging system is and the more comprehensive the contained data is, the more conducive to improving the efficiency of processing the sign language action data.

In some embodiments, the sign language action database may be established and improved based on the sign language tagging system established in this embodiment of the present disclosure, to decrease establishment costs of the sign language database, extend data coverage of the sign language database, and provide reliable linguistics theoretical basis for processing the sign language action data, such as sign language synthesis and sign language translation. In this embodiment, because the basic sign language elements include at least one of the left or right arm feature, the single or both hands shape feature, the orientation or motion feature, the knuckle bending angle, the facial expression feature, and the constraint information, the basic sign language elements cover a wide range of application scenarios.

In an optional embodiment of the present disclosure, step S11 of performing disassembly and classification on sign language action data in a database, to obtain basic sign language elements and obtain element items for each of the basic sign language elements includes:
Sub-step S111: Traverse multiple pieces of sign language action data in the database, perform action disassembly on each piece of sign language action data, to determine key parts respectively corresponding to the multiple pieces of the sign language action data and action features of the key parts.

The key part may include at least one of an arm, a palm, a finger, or a face, and the action feature may include at least one of rotation feature, displacement feature, a bending angle, a key feature, and an expression feature.

Sub-step S112: Perform, based on a linguistics framework, classification processing on the key parts respectively corresponding to the multiple pieces of the sign language action data in the database and the action features of the key parts, to obtain at least two class clusters, each class cluster corresponding to a unique one of the basic sign language elements.

Sub-step S113: Determine, for each class cluster, element items of a basic sign language element corresponding to the class cluster based on action features included in the class cluster.

Specifically, for the various sign language action data in the database, the terminal may perform action disassembly one by one, and determine, for each piece of the sign language action data, a key part and an action feature of the key part. The key part may include a part such as an arm, a palm, a finger, or a face. The action feature may include at least one of rotation feature, displacement feature, a bending angle, a key feature, and an expression feature.

In some embodiments, the terminal may perform classification on all the key parts and the action features of the key parts obtained by the disassembly, to obtain a plurality of class clusters, each class cluster corresponding to one basic sign language element. For example, in disassembling the sign language action data, the sign language action features may be classified according to six dimensions, namely a left or right arm feature, a single or both hands shape feature, an orientation or motion feature, a knuckle bending angle, a facial expression feature, and constraint information. The left or right arm feature may include a bending degree of the arms, a state of rising or droop, and other arm features in the sign language action. The single or both hands shape feature may include shapes and gestures of fingers. The orientation or motion feature may include a palm orientation, a motion state of an arm or palm, and other features. The knuckle bending angle is used for indicating bending degrees of knuckles of the fingers, for example, the third knuckle of the left index finger bends at 45°. The facial expression feature refers to a facial expression in sign language action, such as a smile, upset, or surprise expression. The constraint information may include a contact state of a key part and a time limitation in the sign language action, or other information. For example, in the sign language action of the sign language word "love", the constraint information is "the right palm is in contact with the top knuckle of the left thumb", and in the sign language action of the sign language word "red", the constraint information is "the right index finger and the middle finger touch the lip".

In some embodiments, after determining the class clusters respectively corresponding to the basic sign language elements, the terminal may determine, for each class cluster, element items of a basic sign language element corresponding to the class cluster based on action features included in the class cluster. Specifically, for each class cluster, the terminal may use each action feature in the class cluster as an element item. The terminal may combine the basic sign language elements and the element items, to conveniently represent the sign language actions.

In this embodiment, the element items of the basic sign language elements are determined by classification processing, thereby increasing accuracy of determining the element items.

In some embodiments, the action feature includes at least one of rotation feature, displacement feature, a bending angle, a key feature, and an expression feature.

In this embodiment, because the action feature includes at least one of the rotation feature, the displacement feature, the bending angle, the key feature, and the expression feature, the action feature covers a wide range of application scenarios.

In an optional embodiment of the present disclosure, step 102 of performing element analysis on the sign language action data based on a pre-established sign language tagging system, to determine a sign language tag sequence corresponding to the sign language action data includes:

Step S21: Perform element analysis on the sign language action data to determine a first basic sign language element, and a first element item and a first timestamp of the first basic sign language element.

Step S22: Determine, based on the pre-established sign language tagging system, first tagging information of the first basic sign language element and second tagging information of the first element item.

Step S23: Determine, based on the first timestamp, the first tagging information, and the second tagging information, the sign language tag sequence corresponding to the sign language action data.

Specifically, after obtaining the to-be-processed sign language action data, the terminal may first perform element analysis on the sign language action data, to determine basic sign language elements included in the sign language action data and the element items of the basic sign language elements, that is, determine the first basic sign language element, the first element item of the first basic sign language element, and the first timestamps of the first basic sign language element. The terminal may analyze the sign language action data to obtain the first basic sign language element and the first element item, thereby determining minimum feature units of the sign language action data, and making it convenient to perform analysis processing on the sign language action data subsequently.

In some embodiments, the sign language tagging system includes tagging information for each basic sign language element and each element item, that is, the sign language tagging system constructs a standard of tagging any sign language action data, which can be applied to any scenario and any sign language action data, thereby having wide applicability. The terminal can search the sign language tagging system for the first tagging information of each first basic sign language element in the sign language action data and the second tagging information of each first element item, to generate the sign language tag sequence of the sign language action data based on the first tagging information and the second tagging information. The sign language tag sequence is uniquely corresponding to the sign language action data, so that the sign language action corresponding to the sign language action data can be determined based on the sign language tag sequence. In addition, the sign language tag sequence can be identified by the machine, so that the terminal can perform sign language translation processing and sign language synthesis processing on the sign language action data based on the sign language tag sequence of the sign language action data.

For example, for the sign language word "love", element analysis is first performed to determine basic sign language elements and element items corresponding to the basic sign language elements, and then corresponding tagging information is determined based on the sign language tagging system, specifically as shown in Table. 1.

**Table. 1**

| Basic sign language elements | Element items | Tagging information |
|---|---|---|
| Single or both hands shape feature | The left thumb rises in vertical, and the other four fingers are in the shape of a fist | T0 |
| | The five fingers of the right hand is straight and close together | T0_O60, IMRP0 |
| Motion feature | The left arm is oblique | Still_03 |
| | The right arm is shifted backwards | Straight_06 |
| Constraint information | The right palm is in contact with the top knuckle of the left thumb | C (DR, T4L) |
| Orientation feature | The left palm faces right | OR_L_right |
| | The right palm faces down | OR_R_down |
| Facial expression feature | Smile | smile |

Based on the tagging information corresponding to the basic sign language elements and the element items in Table. 1, the sign language tag sequence of the sign language word "love" can be determined. The tagging information shown in Table. 1 is merely used as an example, and does not constitute limitations to a corresponding relationship between the tagging information of the sign language tagging system and the basic sign language elements and a corresponding relationship between the tagging information and the element items in this embodiment of the present disclosure, and corresponding tagging standards can be formulated according to actual requirements. This is not limited in the present disclosure.

In this embodiment, element analysis is performed on the sign language action data, to determine the first basic sign language element corresponding to the sign language action data, and the first element item and the first timestamp of the first basic sign language element, the the first tagging information of the first basic sign language element and the second tagging information of the first element item are determined based on the pre-established sign language tagging system, and the sign language tag sequence corresponding to the sign language action data is determined based on the first timestamp, the first tagging information, and the second tagging information. In this way, the sign language tag sequence includes both the tagging information and the timestamp, so that the sign language tag sequence can accurately represent the sign language action, thereby improve the expressing ability of the sign language tag sequence.

In an optional embodiment of the present disclosure, the step 103 of performing operation processing on the sign language action data based on the sign language tag sequence includes: driving, based on the sign language tag sequence, a pre-established three-dimensional character model to perform the sign language action corresponding to the sign language action data.

Specifically, after determining the sign language tag sequence of the to-be-processed sign language action data, the terminal may further drive, based on the sign language tag sequence, the three-dimension character model to perform the sign language action corresponding to the sign language action data, that is, to synthesize the sign language action by 3D technologies.

In this embodiment, the pre-established three-dimensional character model is driven, based on the sign language tag sequence, to perform the sign language action corresponding to the sign language action data, so that the three-dimension character model can be controlled, by using the sign language tag sequence obtained by the analyzing, to perform the sign language action, thereby improving flexibility of the three-dimensional character model to perform the sign language action.

In some embodiments, step 103 of performing operation processing on the sign language action data based on the sign language tag sequence includes: performing sign language translation processing on the sign language action data based on the sign language tag sequence, to obtain a target text sequence corresponding to the sign language action data.

The target text sequence is textual content obtained by translating the sign language action data. The target text sequence has a meaning consistent with the sign language action data, and represents the meaning of the sign language action data by words or sentences in a predetermined language. For example, the target text sequence corresponding to the sign language action data corresponding to the meaning "love" may be the word "love" in English.

Specifically, the terminal may perform sign language translation processing on the sign language action data based on the sign language tag sequence. For example, the terminal may input the sign language tag sequence into a pre-trained sign language translation model, to obtain a target text sequence corresponding to the sign language action data. The terminal may train the sign language translation model based on the sign language tagging system established in the present disclosure, and the trained sign language translation model can accurately recognize the sign language actions corresponding to the sign language tag sequences, and output the recognized sign language actions, thereby improving accuracy of the sign language translation.

In this embodiment, sign language translation processing on the sign language action data is performed based on the sign language tag sequence, to obtain the target text sequence corresponding to the sign language action data. In this way, the sign language action data can be translated by using the sign language tag sequence, thereby improving the accuracy of the translation.

In addition to translating the sign language action data into the target text sequence, the terminal may further perform analysis processing on the text sequence based on the sign language tagging system of the present disclosure, to convert the text sequence into a corresponding sign language action.

In some embodiments, as shown in FIG. 1C, a data processing method is provided. The method may be performed by a terminal or a server, or may be performed by the terminal and the server jointly. Descriptions are made by using an example in which the method is applied to a terminal, and the method specifically includes the following steps: Step S41: Perform word segmentation processing on a to-be-translated text sequence, to obtain a natural word sequence corresponding to the text sequence. Step S42: Determine, for each natural word in the natural word sequence, a second basic sign language element and a second element item corresponding to the second basic sign language element. Step S43: Sort the second basic sign language elements and the second element items, to generate a sign language element sequence conforming to a sign language grammar rule. Step S44: Determine a sign language tag sequence corresponding to the sign language element sequence based on a sign language tagging system. Step S45: Perform sign language translation processing on the text sequence based on the sign language tag sequence, to obtain a sign language action corresponding to the text sequence.

The language of the to-be-translated text sequence may be in any language, such as Chinese, English, and Korean, which is not limited in the present disclosure. When converting the text sequence into the sign language action, the terminal may convert texts in a language into sign language action in a country using the language, or may convert a text of a source language into a sign language action in a country using a target language. The source language and the target language may be preset or specified as required.

The natural words specifically refer to words used by users able to hear and speak. By using an example in which the language of the to-be-translated text sequence is Chinese, the natural word may be a Chinese word included in The Contemporary Chinese Dictionary, Xinhua Dictionary, and the like.

A natural word is corresponding to a sign language word, and basic sign language elements and element items corresponding to the natural word can be determined according to the sign language word corresponding to the natural word. For example, for the natural word "love", information of the basic sign language elements of the sign language word "love" is shown in Table. 1. Because a sign language action requires a sequence between the basic sign language elements and the element items, a correct sequence is necessary for obtaining a correct action. After determining the basic sign language elements and the element items corresponding to the natural word sequence, the terminal can sort the basic sign language elements and the element items to generate the sign language element sequence. Then, the terminal can determine the sign language tag sequence corresponding to the sign language element sequence based on the sign language tagging system. For example, based on the Table. 1, the sign language tag sequence corresponding to the natural word "love" can be determined as "T0- T0-O60,IMRP0- Still_03- Straight_06-C(DR,T4L)- OR_L_right-OR_R down- simile". The terminal can perform sign language translation processing on the text sequence based on the sign language tag sequence, to obtain a sign language action. The sign language action may be a picture about the sign language action, or may be a demonstration animation of the sign language action. For example, the terminal may determine the sign language sequence corresponding to the text sequence based on a sign language translation model, and convert the sign language word into the sign language tag sequence, to obtain a corresponding sign language action, or may directly drive, based on the sign language tag sequence, a three-dimensional character model to perform the corresponding sign language action.

In some embodiments, the terminal may convert non-text content into a corresponding sign language action. The non-text content may include at least one of a voice or a picture. Specifically, the terminal may perform character recognition processing on a to-be-translated voice, to obtain a text sequence corresponding to the voice, and then perform the foregoing step S41 to step S45 on the obtained text sequence, to obtain a sign language action corresponding to the voice.

In some embodiments, the terminal can perform image recognition and character recognition on a to-be-translated picture, to obtain a text sequence corresponding to the picture, and then perform the foregoing step S41 to step S45 on the obtained text sequence, to obtain a sign language action corresponding to the picture. Content in the picture includes, but is not limited to, at least one of a character, a figure, and an expression.

According to the foregoing data processing method, word segmentation processing is performed on the to-be-translated text sequence, to obtain the natural word sequence corresponding to the text sequence, then for each natural word in the natural word sequence, the second basic sign language element and the second element item corresponding to the second basic sign language element are determined, the second basic sign language elements and the second element items are sorted to generate the sign language element sequence conforming to the sign language grammar rule, the sign language tag sequence corresponding to the sign language element sequence is determined based on a sign language tagging system, and sign language translation processing on the text sequence is performed based on the sign language tag sequence, to obtain a sign language action corresponding to the text sequence. In this way, a method for converting the text sequence into the sign language action is provided, and accuracy of the generated sign language action is improved because the sign language action is generated based on the sign language elements.

For the sake of concise description, the method embodiments are all described as combinations of series of actions. However, persons skilled in the art know that the embodiments of the present disclosure are not limited by the described action sequence because some steps may be performed in other sequences or simultaneously according to the embodiments of the present disclosure. In addition, persons skilled in the art also know that all the embodiments described in the specification are exemplary embodiments, and the related actions are not necessarily mandatory to the embodiments of the present disclosure.

### Apparatus embodiments

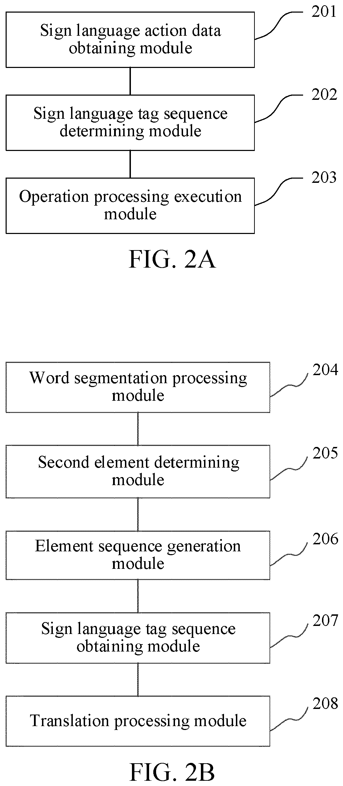

FIG. 2A is a structural block diagram of a data processing apparatus embodiment of the present disclosure, and the apparatus may include:
a sign language action data obtaining module 201, configured to obtain to-be-processed sign language action data;
a sign language tag sequence determining module 202, configured to perform element analysis on the sign language action data based on a pre-established sign language tagging system, to determine a sign language tag sequence corresponding to the sign language action data, the sign language tag sequence including tagging information of basic sign language elements corresponding to the sign language action data; and
an operation processing execution module 203, configured to perform operation processing on the sign language action data based on the sign language tag sequence.

Optionally, the data processing apparatus further includes:
a basic sign language element determining module, configured to perform disassembly and classification on sign language action data in a database, to obtain basic sign language elements and obtain element items for each of the basic sign language elements; and
a sign language tagging system establishing module, configured to establish a sign language tagging system based on the basic sign language elements and the element items of each of the basic sign language elements, the sign language tagging system including tagging information corresponding to each of the element items of each of the basic sign language elements.

Optionally, the basic sign language elements include at least one of a left or right arm feature, a single or both hands shape feature, an orientation or motion feature, a knuckle bending angle, a facial expression feature, and constraint information.

Optionally, the basic sign language element determining module includes:
an action data analysis submodule, configured to multiple pieces of the sign language action data in the database, and perform action disassembly on each piece of the sign language action data to determine key parts respectively corresponding to the multiple pieces of the sign language action data and action features of the key parts;
an action feature classification module, configured to perform classification processing on the key parts respectively corresponding to the multiple pieces of the sign language action data in the database and action features of the key parts, to obtain at least two class clusters, each of the class clusters corresponding to a unique one of the basic sign language elements; and
an element item determining submodule, configured to determine, for each of the class clusters, element items of a basic sign language element corresponding to the class cluster based on action features comprised in the class cluster.

Optionally, the action feature includes at least one of rotation feature, displacement feature, a bending angle, a key feature, and an expression feature.

Optionally, the sign language tag sequence determining module includes:
a first element determining sub-module, configured to perform element analysis on the sign language action data, to determine a first basic sign language element corresponding to the sign language action data, and a first element item and a first timestamp of the first basic sign language element;
a tagging information determining sub-module, configured to determine, based on a pre-established sign language tagging system, first tagging information for the first basic sign language element and second tagging information for the first element item; and
a first tag sequence determining sub-module, configured to determine, based on the first timestamp, the first tagging information, and the second tagging information, the sign language tag sequence corresponding to the sign language action data.

Optionally, the operation processing execution module includes:
a first operation processing sub-module, configured to drive, based on the sign language tag sequence, a pre-established three-dimensional character model to perform a sign language action corresponding to the sign language action data.

Optionally, the operation processing execution module includes:
a second operation processing sub-module, configured to perform sign language translation processing on the sign language action data based on the sign language tag sequence, to obtain a target text sequence corresponding to the sign language action data.

FIG. 2B is a structural block diagram of a data processing apparatus embodiment of the present disclosure, and the apparatus may include:
a word segmentation processing module 204, configured to perform word segmentation processing on a to-be-translated text sequence, to obtain a natural word sequence corresponding to the text sequence;
a second element determining module 205, configured to determine second basic sign language elements respectively corresponding to natural words in the natural word sequence and second element items respectively corresponding to the second basic sign language elements;
an element sequence generation module 206, configured to sort the second basic sign language elements and the second element items, to generate a sign language element sequence conforming to a sign language grammar rule;
a sign language tag sequence obtaining module 207, configured to determine a sign language tag sequence corresponding to the sign language element sequence based on a sign language tagging system; and
a translation processing module 208, configured to perform sign language translation processing on the text sequence based on the sign language tag sequence, to obtain a sign language action corresponding to the text sequence.

A computer device includes a memory and one or more processor, the memory storing computer-readable instructions, and the computer-readable instructions, when executed by the processor, causing the one or more processors to perform steps of the foregoing data processing method.

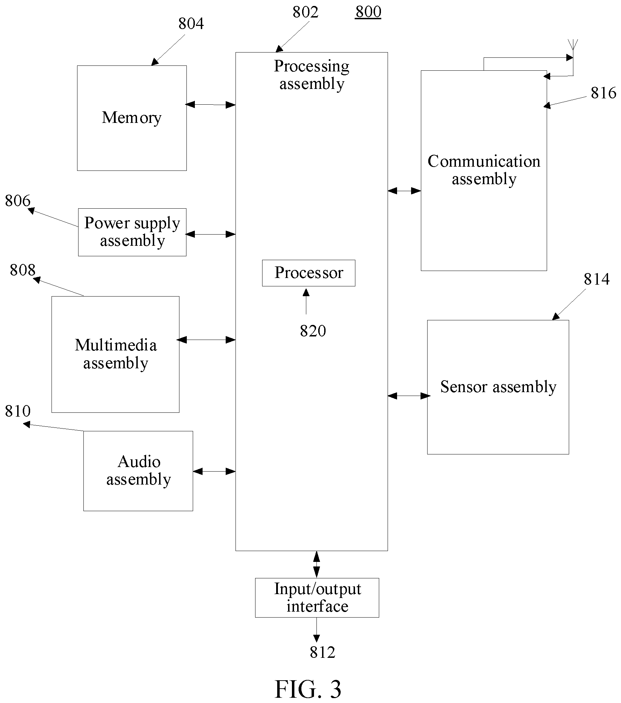

FIG. 3 is a block diagram of a computer device 800 according to an exemplary embodiment. For example, the computer device 800 may be a mobile phone, a computer, a digital broadcasting terminal, a message transceiver, a game controller, a tablet device, a medical device, a fitness facility, a personal digital assistant, or the like.

Referring to FIG. 3, the computer device 800 may include one or more assemblies below: a processing assembly 802, a memory 804, a power supply assembly 806, a multimedia assembly 808, an audio assembly 810, an input/output (I/O) interface 812, a sensor assembly 814, and a communication assembly 816.

The processing assembly 802 generally controls integral operations of the computer device 800, such as operations related to displaying, a phone call, data communication, a camera operation, and a record operation. The processing assembly 802 may include one or more processors 820 to execute instructions, to complete all or some steps of the foregoing method. In addition, the processing assembly 802 may include one or more modules, to facilitate the interaction between the processing assembly 802 and other assemblies. For example, the processing assembly 802 may comprise a multimedia module, to facilitate the interaction between the multimedia assembly 808 and the processing assembly 802.

The memory 804 is configured to store data of various types to support operations on the computer device 800. Examples of the data include instructions of any application program or method that are used for operations on the computer device 800, such as contact data, address book data, a message, a picture, and a video. The memory 804 can be implemented by any type of volatile or non-volatile storage devices or a combination thereof, such as a static random access memory (SRAM), an electrically erasable programmable read-only memory (EPROM), a programmable read-only memory (PROM), a read-only memory (ROM), a magnetic memory, a flash memory, a magnetic disc, or an optical disc.

The power supply assembly 806 provides power to various assemblies of the computer device 800. The power supply assembly 806 may include a power management system, one or more power supplies, and other assemblies associated with generating, managing, and distributing power for the computer device 800.

The multimedia assembly 808 includes a screen of an output interface provided between the computer device 800 and a user. In some embodiments, the screen may include a liquid crystal display (LCD) and a touch panel (TP). If the screen includes a TP, the screen may be implemented as a touchscreen, to receive an input signal from the user. The TP includes one or more touch sensors to sense touching, sliding, and gestures on the TP. The touch sensor may not only sense the boundary of touching or sliding operations, but also detect duration and pressure related to the touching or sliding operations. In some embodiments, the multimedia assembly 808 includes a front camera and/or a rear camera. When the computer device 800 is in an operating mode, such as a shooting mode or a video mode, the front camera and/or the rear camera may receive external multimedia data. Each front camera and rear camera may be a fixed optical lens system or have a focal length and an optical zooming capability.

The audio assembly 810 is configured to output and/or input an audio signal. For example, the audio assembly 810 includes a microphone (MIC). When the computer device 800 is in the operating mode, such as a call mode, a record mode, and a speech information processing mode, the microphone is configured to receive an external audio signal. The received audio signal may be further stored in the memory 804 or transmitted through the communication assembly 816. In some embodiments, the audio assembly 810 further includes a loudspeaker, configured to output an audio signal.

The I/O interface 812 provides an interface between the processing assembly 802 and an external interface module. The external interface module may be a keyboard, a click wheel, buttons, or the like. The buttons may include, but is not limited to: a homepage button, a volume button, a start-up button, and a locking button.

The sensor assembly 814 includes one or more sensors, configured to provide the computer device 800 with various aspects of state assessment. For example, the sensor assembly 814 may detect a powered-on/off state of the computer device 800 and relative positioning of assemblies. For example, the assemblies are a display and a keypad of the computer device 800. The sensor assembly 814 may further perform speech processing on changes in a location of the computer device 800 or an assembly of the computer device 800, a touch between the user and the computer device 800, an azimuth or acceleration/deceleration of the computer device 800 and changes in a temperature of the computer device 800. The sensor assembly 814 may include a proximity sensor, configured to detect the existence of nearby objects without any physical contact. The sensor assembly 814 may further include an optical sensor, such as a CMOS or CCD image sensor, that is used in an imaging application. In some embodiments, the sensor assembly 814 may further include an acceleration sensor, a gyroscope sensor, a magnetic sensor, a pressure sensor, or a temperature sensor.

The communication assembly 816 is configured to facilitate communication in a wired or wireless manner between the computer device 800 and other devices. The computer device 800 may access a communication standard-based wireless network, such as WiFi, 2G, or 3G, or a combination thereof. In an exemplary embodiment, the communication assembly 816 receives a broadcast signal or broadcast related information from an external broadcast management system through a broadcast channel. In an exemplary embodiment, the communication assembly 816 further includes a near field communication (NFC) module, to promote short range communication. For example, the NFC module may be implemented based on a radio frequency identification (RFID) technology, an infra-red data association (IrDA) technology, an ultra-wideband (UWB) technology, a Bluetooth (BT) technology, and other technologies.

In an exemplary embodiment, the computer device 800 may be implemented by using one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, to perform the foregoing method.

In an exemplary embodiment, a non-transitory computer-readable storage medium including instructions, for example, a memory 804 including instructions, is further provided, and the instructions may be executed by the processor 820 of the computer device 800 to complete the foregoing method. For example, the non-transitory computer-readable storage medium may be a ROM, a random access memory (RAM), a CD-ROM, a magnetic tape, a floppy disk, an optical data storage device, or the like.

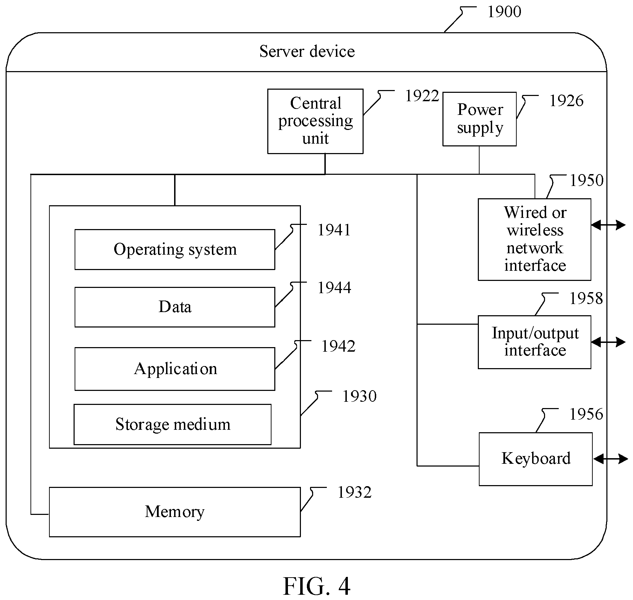

FIG. 4 is a schematic structural diagram of a computer device in some embodiments of the present disclosure. The computer device 1900 may vary greatly in configurations or performance, and may include one or more central processing units (CPUs) 1922 (for example, one or more processors) and memories 1932, and one or more storage medium1930 (for example, one or more mass storage devices) storing an application 1942 or data 1944. The memory 1932 and the storage medium 1930 may be transient or persistent storages. The program stored in the storage medium 1930 may include one or more modules (not shown in the figure), and each module may include a series of instructions and operations for the computer device. Furthermore, the CPU 1922 may be configured to: communicate with the storage medium 1930, and perform, on the computer device 1900, the series of instructions and operations in the storage medium 1930.

The computer device 1900 may further include one or more power supplies 1926, one or more wired or wireless network interfaces 1950, one or more input/output interfaces 1958, one or more keyboards 1956, and/or, one or more operating systems 1941, for example, Windows ServerTM, Mac OS XTM, UnixTM, LinuxTM, and FreeBSDTM.

One or more non-volatile readable storage medium are provided, storing computer-readable instructions, the computer-readable instructions, when executed by one or more processors, causing the one or more processors to perform steps of the foregoing data processing method.

A computer program product is provided, including computer-readable instructions, the computer-readable instructions, when being executed by a processor, implementing steps of the foregoing data processing method.

Persons skilled in the art can easily figure out another implementation solution of the present disclosure after considering the specification and practicing the technical solutions that is disclosed herein. Any variation, use, or adaptive change is covered in the present disclosure. These variations, uses, or adaptive changes follow the general principles in the present disclosure and include common general knowledge or common technical means in the art that are not disclosed in the present disclosure. The specification and the embodiments are considered as merely exemplary, and the scope and spirit of the present disclosure are pointed out in the following claims.

It is to be understood that the present disclosure is not limited to the precise structures described above and shown in the accompanying drawings, and various modifications and changes can be made without departing from the scope of the present application. The scope of protection is subject only to the appended claims.

The above are only preferred embodiments of the present disclosure and are not intended to limit the present disclosure. Any modification, equivalent replacement, or improvement made within the spirit and principle of the present disclosure is included in the protection scope of the present disclosure.

The data processing method, the data processing apparatus, and the computer device provided in the embodiments of the present disclosure are described in detail above. The principle and implementations of the present disclosure are described herein by using specific examples. The descriptions of the foregoing embodiments are merely used for helping understand the method and core ideas of the present disclosure. In addition, persons of ordinary skill in the art can make variations and modifications in terms of the specific implementations and application scopes according to the ideas of the present disclosure. Therefore, the content of this specification shall not be construed as a limit to the present disclosure.

## Claims

1. A data processing method, performed by a computer device and comprising:
obtaining sign language action data;
performing element analysis on the sign language action data based on a pre-established sign language tagging system, to determine a sign language tag sequence, the sign language tag sequence comprising tagging information of basic sign language elements corresponding to the sign language action data; and
performing operation processing on the sign language action data based on the sign language tag sequence.

2. The method according to claim 1, wherein before the performing element analysis on the sign language action data based on a pre-established sign language tagging system, the method further comprises:
performing disassembly and classification on multiple pieces of sign language action data in a database, to obtain basic sign language elements and obtain element items for each of the basic sign language elements; and
establishing a sign language tagging system based on the basic sign language elements and the element items of each of the basic sign language elements, the sign language tagging system comprising tagging information corresponding to each of the element items of each of the basic sign language element.

3. The method according to claim 2, wherein the basic sign language elements comprise at least one of: a left or right arm feature, a single or both hands shape feature, an orientation or motion feature, a knuckle bending angle, a facial expression feature, and constraint information.

4. The method according to claim 2, wherein the performing disassembly and classification on multiple pieces of sign language action data in a database to obtain basic sign language elements and obtain element items for each of the basic sign language elements comprises:
traversing the multiple pieces of sign language action data in the database, and performing action disassembly on each of the multiple pieces of sign language action data to determine key parts respectively corresponding to the multiple pieces of sign language action data and action features of the key parts;
performing classification processing on the key parts respectively corresponding to the multiple pieces of sign language action data in the database and the action features of the key parts, to obtain at least two class clusters, each of the class clusters corresponding to a unique one of the basic sign language elements; and
determining, for each of the class clusters, element items of a basic sign language element corresponding to the class cluster based on action features comprised in the class cluster.

5. The method according to claim 4, wherein the action feature comprises at least one of: rotation feature, displacement feature, a bending angle, a key feature, and an expression feature.

6. The method according to claim 1, wherein the performing element analysis on the sign language action data based on a pre-established sign language tagging system, to determine a sign language tag sequence comprises:
performing element analysis on the sign language action data, to determine a first basic sign language element corresponding to the sign language action data, and a first element item and a first timestamp of the first basic sign language element;
determining, based on a pre-established sign language tagging system, first tagging information for the first basic sign language element and second tagging information for the first element item; and
determining, based on the first timestamp, the first tagging information, and the second tagging information, the sign language tag sequence corresponding to the sign language action data.

7. The method according to claim 1, wherein the performing operation processing on the sign language action data based on the sign language tag sequence comprises:
driving, based on the sign language tag sequence, a pre-established three-dimensional character model to perform a sign language action corresponding to the sign language action data.

8. The method according to claim 1, wherein the performing operation processing on the sign language action data based on the sign language tag sequence comprises:
performing sign language translation processing on the sign language action data based on the sign language tag sequence, to obtain a target text sequence corresponding to the sign language action data.

9. A data processing method, performed by a computer device and comprising:
performing word segmentation processing on a to-be-translated text sequence, to obtain a natural word sequence corresponding to the text sequence;
determining second basic sign language elements respectively corresponding to natural words in the natural word sequence and second element items respectively corresponding to the second basic sign language elements;
sorting the second basic sign language elements and the second element items, to generate a sign language element sequence conforming to a sign language grammar rule;
determining a sign language tag sequence corresponding to the sign language element sequence based on a sign language tagging system; and
performing sign language translation processing on the text sequence based on the sign language tag sequence, to obtain a sign language action corresponding to the text sequence.

10. A data processing apparatus, comprising:
a sign language action data obtaining module, configured to obtain sign language action data;
a sign language tag sequence determining module, configured to perform element analysis on the sign language action data based on a pre-established sign language tagging system, to determine a sign language tag sequence, the sign language tag sequence comprising tagging information of basic sign language elements corresponding to the sign language action data; and
an operation processing execution module, configured to perform operation processing on the sign language action data based on the sign language tag sequence.

11. The apparatus according to claim 10, further comprising:
a basic sign language element determining module, configured to perform disassembly and classification on multiple pieces of sign language action data in a database, to obtain basic sign language elements and obtain element items for each of the basic sign language elements; and
a sign language tagging system establishing module, configured to establish a sign language tagging system based on the basic sign language elements and the element items of each of the basic sign language elements, the sign language tagging system comprising tagging information corresponding to each of the element items of each of the basic sign language elements.

12. The apparatus according to claim 11, wherein the basic sign language elements comprise at least one of: a left or right arm feature, a single or both hands shape feature, an orientation or motion feature, a knuckle bending angle, a facial expression feature, and constraint information.

13. The apparatus according to claim 11, wherein the basic sign language element determining module comprises:
an action data analysis submodule, configured to traverse the multiple pieces of sign language action data in the database, and performing action disassembly on each of the multiple pieces of sign language action data to determine key parts respectively corresponding to the multiple pieces of sign language action data and action features of the key parts;
an action feature classification module, configured to perform classification processing on the key parts respectively corresponding to the multiple pieces of sign language action data in the database and action features of the key parts, to obtain at least two class clusters, each of the class clusters corresponding to a unique one of the basic sign language elements; and
an element item determining submodule, configured to determine, for each of the class clusters, element items of a basic sign language element corresponding to the class cluster based on action features comprised in the class cluster.

14. The apparatus according to claim 13, wherein the action feature comprises at least one of rotation feature, displacement feature, a bending angle, a key feature, and an expression feature.

15. A data processing apparatus, comprising:
a word segmentation processing module, configured to perform word segmentation processing on a to-be-translated text sequence, to obtain a natural word sequence corresponding to the text sequence;
a second element determining module, configured to determine second basic sign language elements respectively corresponding to natural words in the natural word sequence and second element items respectively corresponding to the second basic sign language elements;
an element sequence generation module, configured to sort the second basic sign language elements and the second element items, to generate a sign language element sequence conforming to a sign language grammar rule;
a sign language tag sequence obtaining module, configured to determine a sign language tag sequence corresponding to the sign language element sequence based on a sign language tagging system; and
a translation processing module, configured to perform sign language translation processing on the text sequence based on the sign language tag sequence, to obtain a sign language action corresponding to the text sequence.

16. A computer device, comprising a memory and one or more processor, the memory storing computer-readable instructions, and the computer-readable instructions, when executed by the processor, causing the one or more processors to perform steps of the method according to any one of claims 1 to 9.

17. One or more non-volatile readable storage medium, storing computer-readable instructions, the computer-readable instructions, when executed by one or more processors, causing the one or more processors to perform steps of the method according to any one of claims 1 to 9.

18. A computer program product, comprising computer-readable instructions, the computer-readable instructions, when being executed by a processor, implementing steps of the method according to any one of claims 1 to 9.
